# EUROPEAN PATENT APPLICATION

(11) **EP 2 472 780 A1**
(43) Date of publication of application: **04.07.2012**
(21) Application number: 10811143.6
(22) Date of filing: 23.04.2010
(51) Int. Cl.: H04L 12/24

(54) **METHOD AND NETWORK MANAGEMENT SERVER FOR BACKUPING DATA AND ROLLBACKING DATA**

(30) Priority: 28.08.2009 CN 200910171404
(71) Applicant: ZTE Corporation, Shenzhen, Guangdong 518057 (CN)
(72) Inventor: LIU, Feng, Shenzhen Guangdong 518057 (CN); LIU, Jingxiang, Shenzhen Guangdong 518057 (CN); LI, Pu, Shenzhen Guangdong 518057 (CN)
(74) Representative: Tischner, Oliver
(86) International application number: PCT/CN2010/072115
(87) International publication number: WO 2011/022978

(57) **Abstract**

The disclosure discloses a method and network management server for backing up and rolling back data. The method for backing up data includes: when receiving from a first user terminal a request for operating a data table, the network management server allows the first user terminal to operate the data table when it is determined that the data table is not locked; and after receiving from the network element a synchronization success message with respective to the operation results of the first user terminal for the data table, the network management server backs up the received operation results of the first user terminal for the data table. By the method and network management server of the disclosure, the inconsistency between the backup data in the network management server and the data in the network element can be avoided, and a user terminal only rolls back the data produced by itself when finding an error, so as not to affect the data produced by other user terminals.

## Description

### TECHNICAL FIELD

The disclosure relates to the communication field, in particular to a method and network management server for backing up and rolling back data.

### BACKGROUND

To make the communication network equipment process a communication service according to the specified service logic, off-line data production is needed in the starting and daily maintenance stage of the equipment; the off-line data production way has better security as a user can produce data in a network manager at first, and synchronizes a network element with the data after its checking is passed, and the network element converts the data into its special organization form and format and stores the converted data. With the better processing capability of the communication network equipment, a set of equipments can geographically cover multiple administrative districts, and be maintained by users in different administrative districts or at different office locations of the same administrative district, so it is possible that multiple users produce data at the same time, among whom the communication is inconvenient.

At present, the method for backing up data is to back up all the data in the network manager, including the data being produced and having not been synchronized with the network element, and the backup data may contain an error if not checked and verified. Even a single user backs up the data after synchronizing the network element with the data, other users still may be producing data and has not confirmed the correctness of the data yet. The existing backup way mainly includes manual backup and regular backup, wherein the regular backup can only back up data at a fixed planned time, if the data does not change for a long time, the data backup is unnecessary, and if the data changes frequently, the frequency of the regular backup is not enough.

The defects in the related technology mainly lie in: the backup data in the network manager may contain an error if not checked and verified, which will cause the unreliability of the backup data; in addition, the synchronous operation of multiple users may also cause the change and error of the data, and after such data is restored to the equipment, it may cause the abnormality of the communication service; in a word, the backup data in the network manager and the data in the network element cannot be well synchronized, and, at present, the user cannot only roll back the data produced by itself without affecting the data produced by other users when finding an error during the data production, consequently, the backup way in the related technology will cause the unreliability of the backup data so as to cause unreliable data restored from the backup data.

### SUMMARY

The disclosure provides a method and network management server for backing up and rolling back data, which are used for achieving the consistency between the backup data in the network management server and the data in the network element, in addition, the backup data does not contain unreliable data which is being produced by other user terminals and has not been checked yet, thereby improving the reliability of the backup data. In addition, when finding an error during the data production, the user terminal only rolls back the data produced by itself so as not to affect the data produced by other user terminals.

The disclosure provides a method for backing up data, including:
when receiving from a first user terminal a request for operating a data table, a network management server allows the first user terminal to operate the data table when it is determined that the data table is un-locked; and
after receiving from the network element a synchronization success message with respective to operation results of the first user terminal for the data table, the network management server backs up the received operation results of the first user terminal for the data table.

The disclosure further provides a network management server, including:
a receiving unit, configured to receive from a first user terminal a request for operating a data table, and to receive from a network element a synchronization success message with respective to operation results of the first user terminal for the data table;
a determining unit, configured to determine whether the data table is locked, and to allow the first user terminal to operate the data table when it is determined that the data table is un-locked; and
a storing unit, configured to back up the received operation results of the first user terminal for the data table after the receiving unit receives the synchronization success message with respective to the operation results.

The disclosure further provides a method for rolling back data, including:
when receiving from a first user terminal a request for operating a data table, a network management server allows the first user terminal to operate the data table when it is determined that the data table is un-locked;
after receiving from a network element a synchronization success message with respective to operation results of the first user terminal for the data table, the network management server backs up the received operation results of the first user terminal for the data table; and
after receiving from the first user terminal a command of rolling back data, the network management server restores the data table involved in a backup file to the data tables of the network management server and rolls back the data table to a state in which the data table has not been operated by the first user terminal.

The disclosure further provides a network management server, including:
a receiving unit, configured to receive from a first user terminal a request for operating a data table, and to receive from a network element a synchronization success message with respective to operation results of the first user terminal for the data table;
a determining unit, configured to determine whether the data table is locked, and to allow the first user terminal to operate the data table when it is determined that the data table is un-locked;
a storing unit, configured to back up the received operation results of the first user terminal for the data table after the receiving unit receives the synchronization success message with respective to the operation results; and
a rolling back unit, configured to restore the data table involved in the backup file to the data tables of the network management server and to roll back the data table to a state in which the data table has not been operated by the first user terminal.

Compared with the related technology, by locking the data table operated by the first user terminal to prevent the operation of other user terminals, and backing up the data by the network management server every time the first user terminal synchronizes the network element with the data, the disclosure achieves the consistency between the backup data in the network management server and the data in the network element, and improves the reliability of the backup data. In addition, the disclosure further provides a method for rolling back data for the user terminal, so the user terminal can only roll back the data produced by itself when finding an error during the data production, so as not to affect the data produced by other user terminals.

### BRIEF DESCRIPTION OF THE DRAWINGS

Fig. 1 shows a flowchart according to a first embodiment of the disclosure;
Fig. 2 shows a flowchart according to a second embodiment of the disclosure;
Fig. 3 shows a flowchart according to a third embodiment of the disclosure;
Fig. 4 shows a flowchart according to a fourth embodiment of the disclosure;
Fig. 5 shows a structure of an offline configuration system for communication network equipment of the disclosure;
Fig. 6 shows a structure of a network management server according to a fifth embodiment of the disclosure;
Fig. 7 shows a structure of a network management server according to a sixth embodiment of the disclosure;
Fig. 8 shows a structure of a network management server according to a seventh embodiment of the disclosure; and
Fig. 9 shows a structure of a network management server according to an eighth embodiment of the disclosure.

### DETAILED DESCRIPTION OF THE EMBODIMENTS

In an embodiment of the disclosure, when receiving from the first user terminal a request for operating a data table, a network management server allows the first user terminal to operate the data table and locks the data table to prevent the operation of other user terminals if determining that the data table is not locked; and after receiving the synchronization success message with respective to the operation results of the first user terminal for the data table from the network element, the network management server backs up the received operation results of the first user terminal for the data table.

Furthermore, after backing up the received operation results of the first user terminal for the data table and synchronizing, by the first user terminal, the network element with the produced data, the network management server unlocks the data table to allow the operation of other user terminals if receiving the operation cancelling request for the data table from the first user terminal.

The network management server can back up the received operation results of the first user terminal for the data table by the following process: backing up the received operation results of the first user terminal for the data table at first, and then combining the backed-up operation results with the data in the latest backup file stored in the network management server.

In the embodiment of the disclosure, a historical data snapshot can also be generated for the management and restoration of the data, specifically as follows: after backing up the received operation results of the first user terminal for the data table, the network management server further generates a historical data snapshot record according to the backed-up operation results, i.e., the network management server additional registers a historical data snapshot record in the stored historical data snapshot record table, the historical data snapshot record includes: current time, name of the user terminal, data change description and link to the latest backup file as stored.

Furthermore, data can be further restored according to the historical data snapshot record, specifically as follows: after generating the historical data snapshot record, the network management server restores all the data tables involved in the backup file corresponding to the historical data snapshot record to the corresponding data table stored by the network management server according to the link to the latest backup file stored in the historical data snapshot record selected by the first user terminal, and after receiving the synchronization success message with respective to the operation results of the first user terminal for all the data tables involved in the backup file from the network element, the network management server backs up the received operation results of the first user terminal for all the data tables and generates the historical data snapshot record.

Another embodiment of the disclosure further provides a method for rolling back data, including:
when receiving a request for operating a data table from the first user terminal, the network management server allows the first user terminal to operate the data table and locks the data table to prevent the operation of other user terminals if determining that the data table is not locked; and after receiving a command of rolling back data from the first user terminal, the network management server restores the data table involved in the backup file to the data tables of the network management server and rolls back the data table to a state in which the data table has not been operated by the first user terminal.

In the embodiment of the disclosure, after rolling the data in the data table back to the state of the last backup file which is stored by the network management server and is in the state before the operation of the first user terminal performed, the network management server unlocks the data table to allow the operation of other user terminals if receiving an operation cancelling request for the data table from the first user terminal after the rollback of the data.

Another embodiment of the disclosure further provides an offline configuration system for communication network equipment, including: a network equipment, a network management server and a user terminal, wherein the network equipment can be a network element; and the network management server can back up data and includes: a receiving unit which is used for receiving a request for operating a data table from the first user terminal, and also for receiving the synchronization success message with respective to the operation results of the first user terminal for the data table from the network element; a determining unit which is used for determining whether the data table is locked, and allowing the first user terminal to operate the data table and locking the data table to prevent the operation of other user terminals when it is determined that the data table is un-locked; and a storing unit which is used for backing up the received operation results of the first user terminal for the data table.

The receiving unit of the network management server is further used for receiving an operation cancelling request for the data table from the first user terminal after the network element is synchronized with the data, and furthermore, the network management server further includes an unlocking unit which is used for unlocking the data table.

The storing unit of the network management server is used for backing up the received operation results of the first user terminal for the data table, and then combining the backed-up operation results with the data in the latest backup file stored in the network management server.

The network management server can further generate a historical data snapshot record and further includes a historical data snapshot record generating unit which is used for generating the historical data snapshot record according to the backed-up operation results, i.e., additionally registering a historical data snapshot record in the stored historical data snapshot record table, the historical data snapshot record includes: current time, name of the user terminal, data change description and link to the latest backup file as stored.

The network management server can further restore data according to the historical data snapshot record and further includes a historical data snapshot record restoring unit which is used for restoring all the data tables involved in the backup file corresponding to the historical data snapshot record to the corresponding data table stored by the network management server according to the link to the latest backup file stored in the historical data snapshot record selected by the first user terminal.

Another embodiment of the disclosure further provides a network management server capable of rolling back data, including: a receiving unit which is used for receiving a request for operating a data table from the first user terminal, and also for receiving the synchronization success message with respective to the operation results of the first user terminal for the data table from the network element; a determining unit which is used for determining whether the data table is locked, and allowing the first user terminal to operate the data table and locking the data table to prevent the operation of other user terminals when it is determined that the data table is un-locked; and a rolling back unit which is used for restoring the data table involved in the backup file to the data tables of the network management server, and rolling back the data table to a state in which the data table has not been operated by the first user terminal.

The receiving unit of the network management server is further used for receiving an operation cancelling request for the data table from the first user terminal after the rollback of the data, and furthermore, the network management server further comprises an unlocking unit which is used for unlocking the data table.

By the method and system in the embodiments of the disclosure, the consistency between the backup data and the data in the network element is realized; moreover, the user terminal can only roll back the data produced by itself so as not to affect the data produced by other user terminals when finding an error during data production, so that the reliability of the backup data is improved, and data can be restored more accurately according to the backup data.

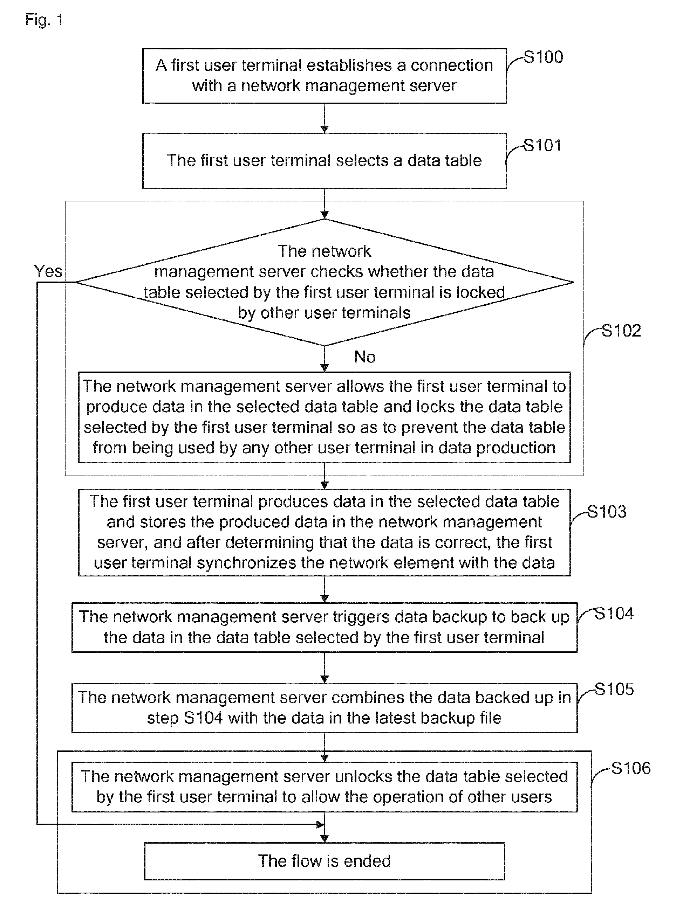

Fig. 1 shows a flowchart according to a first embodiment of the disclosure. As shown in Fig. 1, the method for backing up data includes the following steps.

Step S100: A first user terminal establishes a connection with a network management server.

Step S101: The first user terminal selects from data stored by the network management server a data table which may be used in data production.

Step S102: The network management server checks whether the data table selected by the first user terminal is locked by any other user terminal, if yes, then prevents the selected data table from being operated by the first user terminal and the flow is ended; otherwise the first user terminal is allowed to produce data in the selected data table and to store the produced data in the network management server, and locks the data table selected by the first user terminal to prevent the data table from being used by any other user terminal in data production.

Step S103: The first user terminal produces data in the selected data table and stores the produced data in the network management server, and after determining that the data is correct, synchronizes a network element with the data produced in the selected data table in the network management server, i.e., sends changes of data, such as addition, modification or deletion of data, in the data table selected by the first user terminal, to the network element so that the network element can perform data update.

Step S104: After the first user terminal synchronizes the network element with the data produced in the selected data table, the network element sends a synchronization success message or a synchronization failure message to the network management server. When the network management server receives a synchronization failure message from the network element or has not receive a response until a timeout value, the network management server continues to lock the data table selected by the first user terminal to prevent the selected data table from being operated by any other user terminal; and when receiving a synchronization success message from the network element, the network management server triggers data backup to back up the data in the data table selected by the first user terminal.

Step S105: The network management server combines the data in the data table selected by the first user terminal backed up in step S104 with the data in the latest backup file stored in the network management server.

Before the first user terminal selects the data table to produce data, the data in the network element is consistent with the data stored by the network management server, both of them are original data; moreover, the latest backup file, whose data is the same as the original data, is further stored in the network management server. After the first user terminal synchronizes the network element with the data produced in the selected data table, the data in the network element is the combination of the original data and the data produced by the first user terminal in the selected data table. Besides the original data, the data stored by the network management server further contains the data produced by the first user terminal in the selected data table, and may further contain the data produced by other user terminals in other data tables, and the data in the latest backup file stored in the network management server is still the same as the original data. By the operation of steps S104 and S105, the network management server combines the backup data in the data table selected by the first user terminal with the data in the latest backup file stored, so that the data in the latest backup file stored by the network management server becomes the combination of the original data and the data produced by the first user terminal in the selected data table, accordingly, the data in the latest backup file stored by the network management server is consistent with the data in the network element.

Step S106: When receiving an operation cancelling request for the selected data table from the first user terminal, the network management server unlocks the data table selected by the first user terminal to allow the operation of other user terminals; and the flow is ended.

By the method of the first embodiment, the network management server will trigger the data backup whenever the first user terminal synchronizes the network element with the data in the selected data table, so that the data in the latest backup file stored by the network management server is consistent with the data in the network element, moreover, the first user terminal checks the data before synchronizing the data, and during the data production, the data table selected by the first user terminal is locked to prevent the operation of other user terminals, as a result, there is no unreliable data which is being produced by other user terminals or has not been confirmed yet, and the reliability of the backup data is improved.

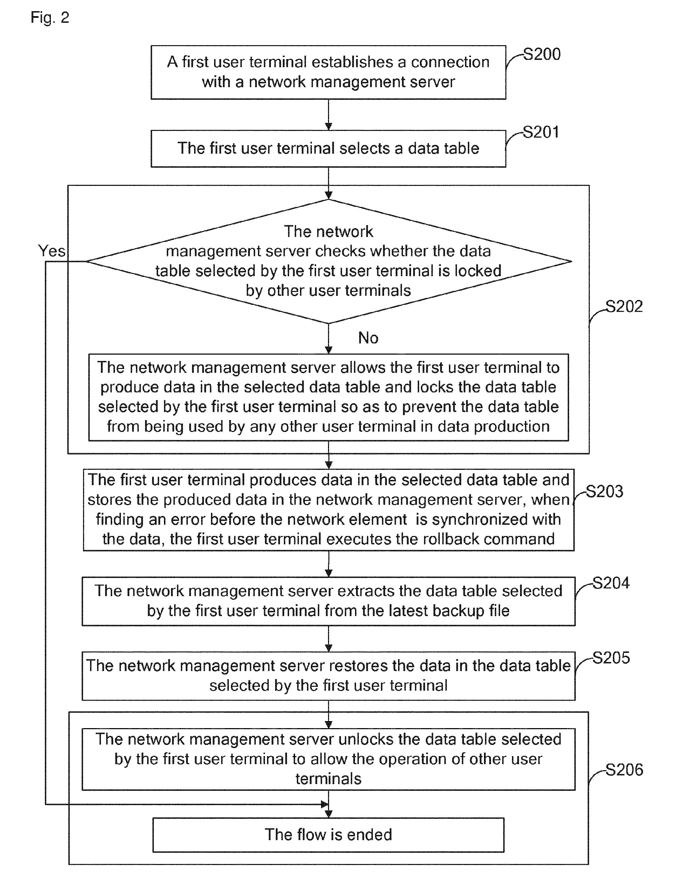

As shown in Fig. 2, the second embodiment of the disclosure provides a method for rolling back data by a user terminal without interfering other user terminals before the network element is synchronized with the produced data, including the following steps.

Step S200: A first user terminal establishes a connection with a network management server.

Step S201: The first user terminal selects from the data stored by the network management server a data table which may be used in data production.

Step S202: The network management server checks whether the data table selected by the first user terminal is locked by other user terminals, if yes, then prevents the selected data table from being operated by the first user terminal and the flow is ended; and if not, allows the first user terminal to produce data in the selected data table and store the produced data in the network management server, and the network management server locks the data table selected by the first user terminal so as to prevent the data table from being used by any other user terminal in data production.

Step S203: The first user terminal produces data in the selected data table and stores the produced data in the network management server, and when finding an error during checking data before the network element is synchronized with the data, the first user terminal executes the rollback command to roll back the data produced by itself in the selected data table in order to make the selected data table restored to the state in which the data table has not been selected by the first user terminal to produce data.

Step S204: When receiving the rollback command from the first user terminal, the network management server checks the data table selected by the first user terminal and extracts the data table selected by the first user terminal from the latest backup file stored by the network management server.

Step S205: The network management server automatically carries out data restoration according to the data table selected by the first user terminal in latest backup file, and only restores the data table selected by the first user terminal to the state before the first user terminal selects the data table to produce data so as not to affect the data being produced by other user terminals.

Before the first user terminal selects a data table from the data stored by the network management server to produce data, the data in the latest backup file stored by the network management server is consistent with the data in the network element as well as the data stored by the network management server; when the first user terminal has produced data in the selected data table but does not synchronize the network element with the data, the data stored by the network management server changes due to the operation of the first user terminal, but the data in the latest backup file stored by the network management server is still consistent with the data in the network element; by the operation of steps S204 and S205, after the data stored by the network management server is restored by the data in the latest backup file stored by the network management server, the data stored by the network management server is consistent with the data in the network element as well as the data in the latest backup file stored by the network management server, all the data is restored to the state before the first user terminal selects a data table from the data stored by the network management server to produce data, therefore, the first user terminal successfully rolls back data.

Step S206: When receiving an operation cancelling request for the selected data table from the first user terminal, the network management server unlocks the data table selected by the first user terminal to allow the operation of other user terminals, and the flow is ended.

By the method of the second embodiment, the first user terminal can only roll back its own data when finding an error during data production so as not to affect other user terminals.

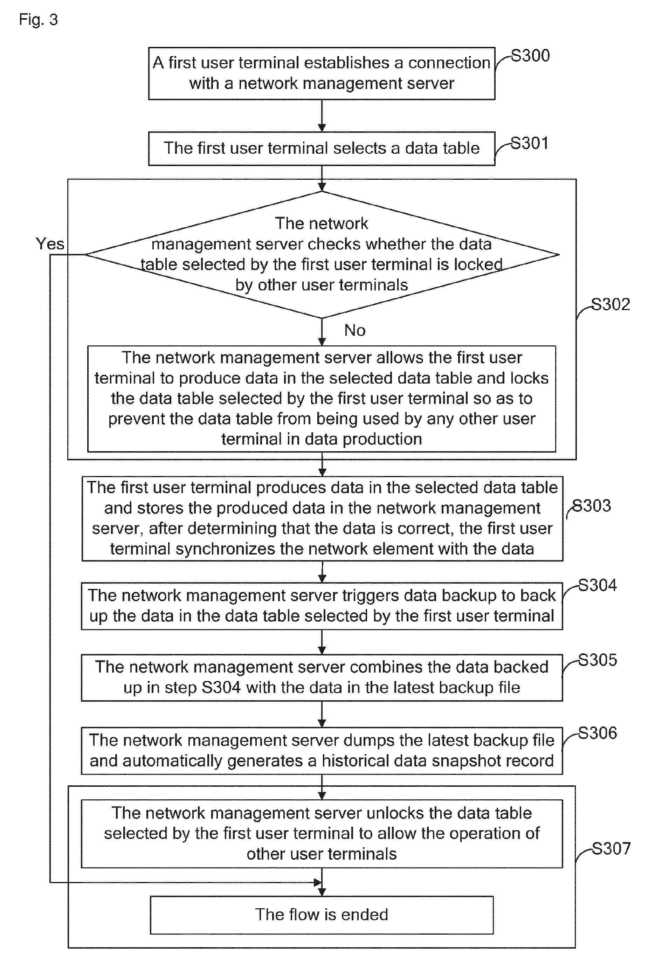

As shown in Fig. 3, the third embodiment of the disclosure provides a way of generating a historical data snapshot record, and the difference between the third embodiment and the first embodiment lies in:
between step S105 and step S106, the following step is added, i.e., step S306 in Fig. 3, the step S306 specifically includes:
the network management server stores the latest backup file, and automatically generates the historical data snapshot record to record the current time, name of user terminal, data change description and link to the latest backup file as stored. The specific generation process is as follows: whenever the user terminal synchronizes the network element with the data, the network management server will trigger the data backup to generate the latest backup file, whose data is consistent with the data in the network element at this moment; in order to save the storage space, the generated latest backup file will be stored in a catalogue or a storage device; there is a historical data snapshot record table in the network management server, and after the generated latest backup file is stored, the network management server additional registers a historical data snapshot record in the historical data snapshot record table, the historical data snapshot record includes current time, name of user terminal, data change description and link to the latest backup file as stored. That is to say, every time the user terminal synchronizes the network element with the data, i.e., every time the data in the network element changes, the data in the latest backup file stored in the network management server also changes and becomes consistent with the data in the network element and are stored; besides, a record is additionally added in the historical data snapshot record table of the network management server to record the current time, name of the user terminal, data change description and link to the latest backup file as stored. During storing the latest backup file, all the last updated backup files can be stored, for example: storing the files backed up in one day as much as possible, daily storing the last updated file of the files backed up in one week, monthly storing the last updated file of the files backed up in one year, in such way, not only space is saved, but also the backup file which the user is most likely to use is reserved. Of course, other storage ways can also be adopted and there is no specific limit here.

By the method provided by the third embodiment, a historical data snapshot recorded can be established for the latest backup file so as to be convenient for the management and restoration of data.

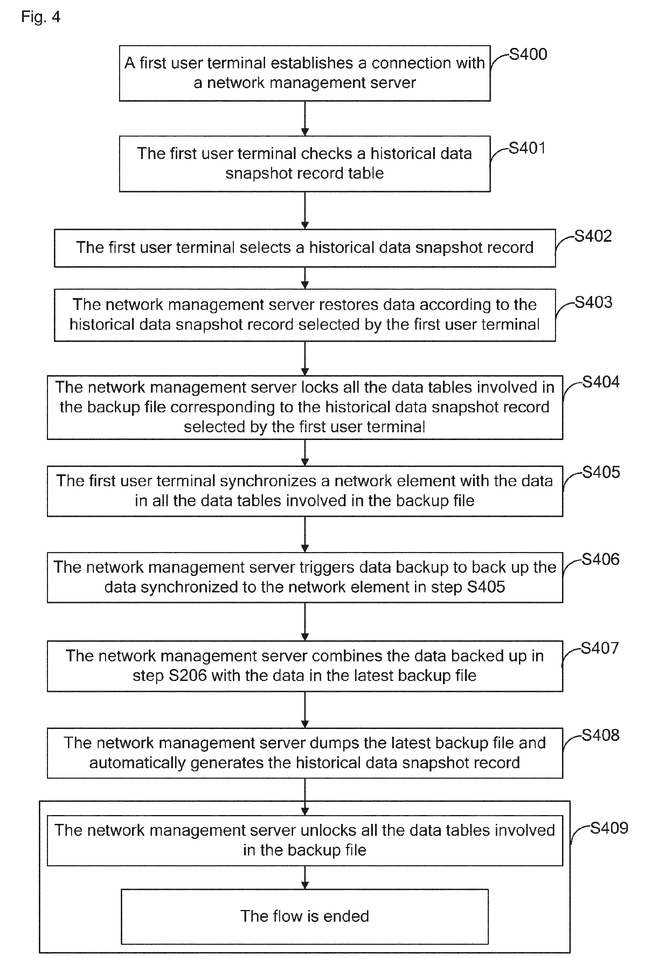

As shown in Fig. 4, based on the third embodiment, the fourth embodiment of the disclosure provides a method for restoring data by a user terminal according to the historical data snapshot record, including the following steps.

Step S400: A first user terminal establishes a connection with a network management server.

Step S401: The first user terminal checks the historical data snapshot record table stored by the network management server, including the current time, name of the user terminal, data change description and link to the latest backup file stored, which are recorded in each historical data snapshot record.

Step S402: The first user terminal selects a historical data snapshot record as required.

Step S403: The network management server extracts a backup file corresponding to the historical data snapshot record selected by the first user terminal according to the link to the latest backup file stored in the historical data snapshot record selected by the first user terminal, and restores all the data tables involved in the backup file corresponding to the historical data snapshot record selected by the first user terminal to the corresponding data table stored by the network management server to make the data in the corresponding data table of the network management server completely consistent with that in all the data tables involved in the backup file corresponding to the historical data snapshot record selected by the first user terminal.

Step S404: The network management server locks all the data tables involved in the backup file corresponding to the historical data snapshot record selected by the first user terminal to only allow the operation of the first user terminal rather than the operation of other user terminals.

Step S405: The first user terminal synchronizes the network element with all the data in all the data tables involved in the backup file corresponding to the historical data snapshot record selected.

Step S406: After the first user terminal synchronizes the network element with all the data in all the data tables involved in the backup file corresponding to the historical data snapshot record selected, the network element sends a synchronization success message or a synchronization failure message to the network management server. When the network management server receives the synchronization failure message from the network element or has not receive a response until a timeout value, the network management server continuously locks all the data tables involved in the backup file corresponding to the historical data snapshot record selected by the first user terminal to prevent the operation of other user terminals; and when receiving the synchronization success message from the network element, the network management server triggers data backup to back up the data in all the data tables involved in the backup file corresponding to the historical data snapshot record selected by the first user terminal.

Step S407: The network management server combines the data in all the data tables involved in the backup file corresponding to the historical data snapshot record selected by the first user terminal which is backed up in step S406 with the data in the latest backup file stored in the network management server in order to update the data in the latest backup file stored in the network management server to be consistent with the data in the network element.

Step S408: The network management server stores the latest backup file and automatically generates the historical data snapshot record, i.e., additionally adding a historical data snapshot record in the historical data snapshot record table, including: current time, name of the user terminal, data change description and link to the latest backup file as stored.

Step S409: When receiving an operation cancelling request for all the data tables involved in the backup file from the first user terminal, the network management server unlocks all the data tables involved in the backup file to allow the operation of other user terminals; and the flow is ended.

By the method provided by the fourth embodiment, the objective of restoring data by the user terminal according to the historical data snapshot record is achieved.

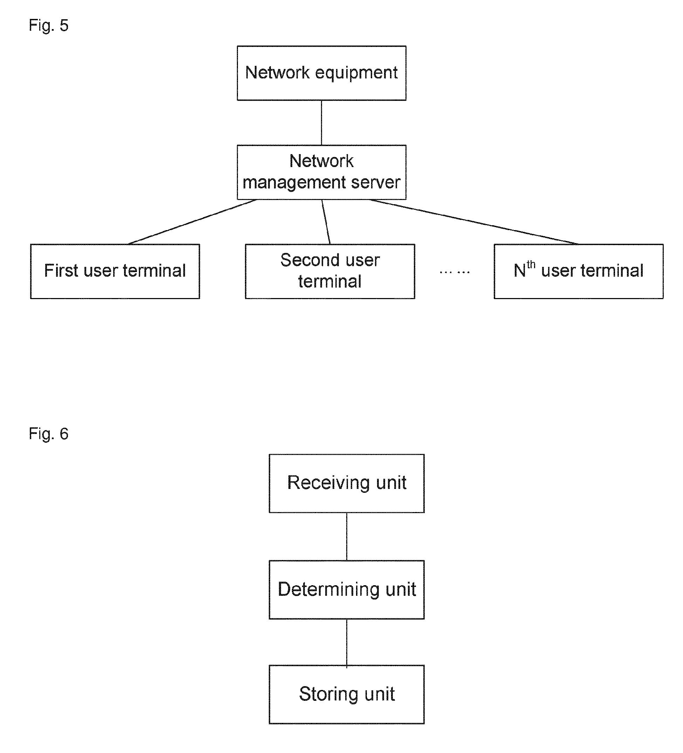

As shown in Fig. 5, the embodiment of the disclosure further provides an offline configuration system for communication network equipment, including: a network equipment, a network management server and a user terminal, wherein the network equipment can be a network element; and there may be one or more user terminals. The data in the network equipment has already been in effect and concerns the correctness of the communication service processing logic; and the network management server has the data being produced and historical backup data. All the network management server, network equipment and user terminal are in network connection with one another, and the system supports that multiple user terminals are synchronous connected to the network management server to produce data. The system is introduced below by a specific embodiment in detail.

The fifth embodiment of the disclosure provides a network management server for backing up data, as shown in Fig. 6, including:
a receiving unit which is used for receiving from the first user terminal a request for operating a data table, and also for receiving from the network element the synchronization success message with respective to the operation results of the first user terminal for the data table;
a determining unit which is used for determining whether the data table is locked, and allowing the first user terminal to operate the data table and locking the data table to prevent the operation of other user terminals when it is determined that the data table is un-locked; and
a storing unit which is used for backing up the received operation results of the first user terminal for the data table.

Furthermore, the receiving unit of the network management server is further used for receiving from the first user terminal an operation cancelling request for the data table, and the network management server further includes an unlocking unit which is used for unlocking the data table.

The storing unit of the network management server is used for backing up the received operation results of the first user terminal for the data table, and then combining the backed-up operation results of the first user terminal for the data table with the data in the latest backup file stored in the network management server.

By the network management server provided by the embodiment, whenever the user terminal synchronizes the network equipment with the data, the network management server will carry out data backup to make the backup data thereof consistent with the data in the network equipment; moreover, the backup data is checked by the user terminal, and the data table operated by the user terminal is locked to prevent the operation of other user terminals during the data production, therefore, the backup data does not contain unreliable data which is being produced by other user terminals and has not been confirmed yet, and the reliability of the backup data is improved.

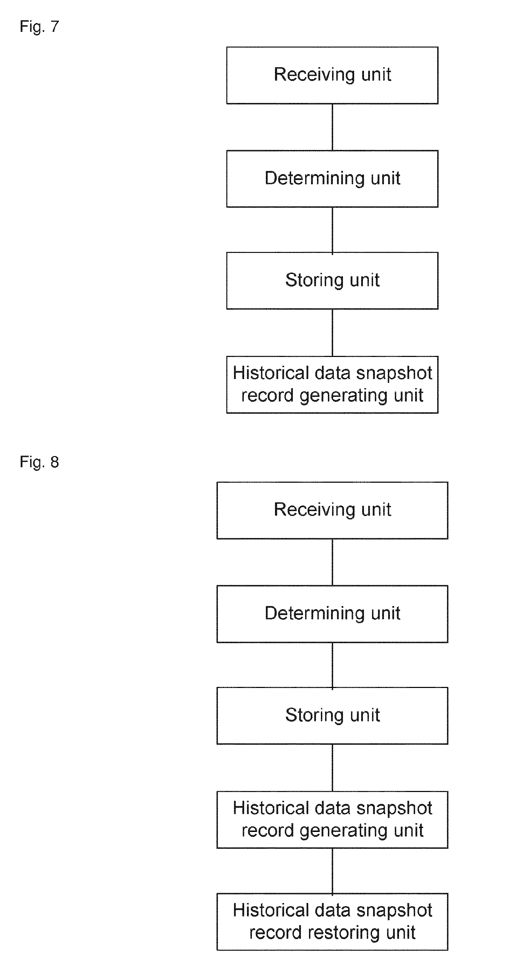

The sixth embodiment of the disclosure provides a network management server capable of generating a historical data snapshot record, as shown in Fig. 7, based on the fifth embodiment, the network management server further includes:
a historical data snapshot record generating unit which is used for generating the historical data snapshot record according to the backed-up operation results of the first user terminal for the data table, i.e., for additionally registering a historical data snapshot record in the stored historical data snapshot record table after the received operation results of the first user terminal for the data table is backed up, the historical data snapshot record includes: current time, name of the user terminal, data change description and link to the latest backup file as stored.

By the network management server provided by the embodiment, the historical data snapshot record can be generated so as to be convenient for the management and restoration of the data.

The seventh embodiment of the disclosure provides a network management server capable of restoring data according to the historical data snapshot record, as shown in Fig. 8, based on the sixth embodiment, the network management server further includes: a historical data snapshot record restoring unit which is used for restoring all the data tables involved in the backup file corresponding to the historical data snapshot record to the corresponding data table stored by the network management server according to the link to the latest backup file stored in the historical data snapshot record selected by the first user terminal.

By the network management server provided by the embodiment, data can be restored according to the historical data snapshot record.

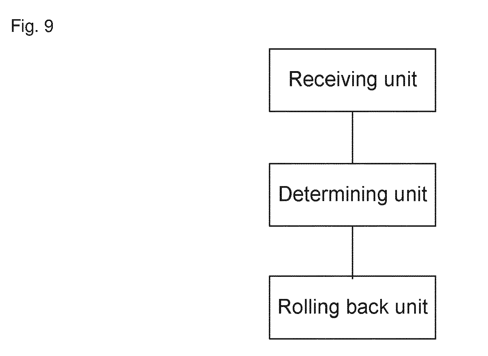

The eighth embodiment of the disclosure provides a network management server capable of rolling back data, as shown in Fig. 9, including:
a receiving unit which is used for receiving from the first user terminal a request for operating a data table, and also for receiving from the network element the synchronization success message with respective to the operation results of the first user terminal for the data table;
a determining unit which is used for determining whether the data table is locked, and allowing the first user terminal to operate the data table and locking the data table to prevent the data table being operated by other user terminals when it is determined that the data table is un-locked; and
a rolling back unit which is used for restoring the data table involved in the backup file to the data tables of the network management server, and rolling back the data table to a state in which the data table has not been operated by the first user terminal.

Furthermore, the receiving unit of the network management server is further used for receiving from the first user terminal an operation cancelling request for the data table, and the network management server further includes an unlocking unit which is used for unlocking the data table.

By the network management server provided by the embodiment, the user terminal can only roll back the data produced by itself so as not to affect the data produced by other user terminals.

Obviously, any modifications and variations for the disclosure can be made by those skilled in the art within the spirit and scope of the disclosure. In this way, if such modifications and variations of the disclosure are in the scope of the claims and its equivalents, the disclosure is intended to cover such modifications and variations.

## Claims

1. A method for backing up data, comprising:
when receiving from a first user terminal a request for operating a data table, allowing, by a network management server, the first user terminal to operate the data table when it is determined that the data table is un-locked; and
after receiving from the network element a synchronization success message with respective to operation results of the first user terminal for the data table, backing up, by the network management server, the received operation results of the first user terminal for the data table.

2. The method according to claim 1, further comprising: when backing up the received operation results of the first user terminal for the data table,
combining the backed-up operation results of the first user terminal for the data table with data in a latest backup file stored in the network management server.

3. The method according to claim 1, further comprising: after backing up the received operation results of the first user terminal for the data table,
generating, by the network management server, a historical data snapshot record based on the backed-up operation results of the first user terminal for the data table, wherein the historical data snapshot record comprises current time, name of the user terminal, data change description and link to the latest backup file as stored.

4. The method according to claim 3, further comprising: after generating by the network management server the historical data snapshot record,
restoring data based on the generated historical data snapshot record, comprising:
restoring, by the network management server, all data tables involved in a backup file corresponding to the historical data snapshot record to a corresponding data table stored by the network management server, based on the link to the latest backup file stored in the historical data snapshot record selected by the first user terminal; and
after receiving from the network element a synchronization success message with respective to operation results of the first user terminal for all data tables involved in the backup file, backing up, by the network management server, received operation results of the first user terminal for all the data tables and generating a historical data snapshot record.

5. A method for rolling back data, comprising:
when receiving from a first user terminal a request for operating a data table, allowing, by a network management server, the first user terminal to operate the data table when it is determined that the data table is un-locked; and
after receiving from a network element a synchronization success message with respective to operation results of the first user terminal for the data table, backing up, by the network management server, received operation results of the first user terminal for the data table; and
after receiving from the first user terminal a command of rolling back data, restoring, by the network management server, the data table involved in the backup file to data tables of the network management server and rolling back the data table to a state in which the data table has not been operated by the first user terminal.

6. A network management server, comprising:
a receiving unit, configured to receive from a first user terminal a request for operating a data table, and to receive from a network element a synchronization success message with respective to operation results of the first user terminal for the data table;
a determining unit, configured to determine whether the data table is locked, and to allow the first user terminal to operate the data table when it is determined that the data table is un-locked; and
a storing unit, configured to back up received operation results of the first user terminal for the data table after the receiving unit receives the synchronization success message with respective to the operation results.

7. The network management server according to claim 6, wherein the storing unit is further configured to combine the backed-up operation results of the first user terminal for the data table with data in a latest backup file stored in the network management server when backing up the received operation results of the first user terminal for the data table.

8. The network management server according to claim 6, wherein the network management server further comprises:
a historical data snapshot record generating unit, configured to generate a historical data snapshot record based on the backed-up operation results of the first user terminal for the data table, wherein the historical data snapshot record comprises current time, name of the user terminal, data change description and link to the latest backup file as stored.

9. The network management server according to claim 8, wherein the network management server further comprises:
a historical data snapshot record restoring unit, configured to restore all data tables involved in a backup file corresponding to the historical data snapshot record to a corresponding data table stored by the network management server, based on the link to the latest backup file stored in the historical data snapshot record selected by the first user terminal.

10. A network management server, comprising:
a receiving unit, configured to receive from a first user terminal a request for operating a data table, and to receive from a network element a synchronization success message with respective to operation results of the first user terminal for the data table;
a determining unit, configured to determine whether the data table is locked, and to allow the first user terminal to operate the data table when it is determined that the data table is un-locked;
a storing unit, configured to back up received operation results of the first user terminal for the data table after receiving by the receiving unit the synchronization success message with respective to the operation results; and
a rolling back unit, configured to restore the data table involved in a backup file to data tables of the network management server and to roll back the data table to a state in which the data table has not been operated by the first user terminal.
